Europäisches Patentamt

European Patent Office

Office européen des brevets

(11) Veröffentlichungsnummer: **0 096 108**
A2

# (12) EUROPÄISCHE PATENTANMELDUNG

(21) Anmeldenummer: **82109525.4**

(51) Int. Cl.³: **B 62 J 7/04**

(22) Anmeldetag: **14.10.82**

(30) Priorität: **15.06.82 DE 3222483**

(43) Veröffentlichungstag der Anmeldung:
**21.12.83 Patentblatt 83/51**

(84) Benannte Vertragsstaaten:
**AT BE CH DE FR GB IT LI LU NL SE**

(71) Anmelder: **KRAUSER Kraftfahrzeug-Zubehör
Vertriebs-GmbH
Hörmannsbergerstrasse 18
D-8905 Mering(DE)**

(72) Erfinder: **Krauser, Michael
Obere Bahnhofstrasse 56 - 60
D-8034 Germering(DE)**

(74) Vertreter: **von Kirschbaum, Albrecht, Dipl.-Ing.
Hermann-Ehlers-Strasse 21a
D-8034 Germering(DE)**

(54) Zwischenteil.

(57) Ein zwischenteil zum sicheren Haltern eines Gepäckstückes, insbesondere eines Motorradkoffers an einer Gepäckträgerbrücke weist in der Draufsicht eine etwa T-förmig ausgebildete Platte auf, von deren querverlaufenden Teil senkrecht nach außen an den beiden äußeren Enden des quer verlaufenden Teils zwei klauenförmige Ansätze vorstehen. Die beiden klauenförmigen Ansätze weisen auf ihrer Oberseite Versteifungssegmente auf und die T-förmig ausgebildete Platte weist parallel zu ihrem quer verlaufenden Teil mehrere auf der Unterseite ausgebildete Versteifungsrippen auf.

FIG. 1

FIG. 2

Anwaltsakte: K-1291 EPA

B e s c h r e i b u n g

Die Erfindung betrifft ein Zwischenteil zum sicheren Haltern insbesondere eines Motorradkoffers an einer Gepäckträgerbrücke.

Um vor allem kleinere Motorradkoffer hinter einem Fahrersitz bzw. einer Sitzbank eines Motorrades abnehmbar anbringen zu können, ist zwischen seitlich an dem Motorrad angebrachten Trägern oder Halterungen für größere Motorradkoffer eine diese Träger oder Halterungen verbindende, quer zur Motorradlängsachse angebrachte Gepäckträgerbrücke vorgesehen, in deren Auflagefläche konisch zulaufende Ausschnitte ausgebildet sind, wie beispielsweise in dem GM 77 07 615.4 und der Patentanmeldung P 32 11 308.0 der Anmelderin beschrieben und dargestellt ist. Um einen der kleineren Motorradkoffer an einer solchen Gepäckträgerbrücke anbringen zu können, sind bisher in der Mitte an einer Längsseite dieser Motorradkoffer an einer von deren Boden vorstehenden Ausbuchtung ein abschließbares Halterungsschloß sowie in einem bestimmten Abstand an der anderen Kofferlängsseite am Boden jeweils außen zwei Schrauben mit durch Federdruck anliegende Unterlagscheiben vorgesehen. Hierbei sind die Schrauben so weit in den Kofferboden geschraubt, daß die unter Federdruck stehenden Unterlagscheiben einen Abstand von dem Kofferboden haben, der etwa der Dickenabmessung der Gepäckträgerbrücke entspricht. Ferner ist an der Unterseite der Gepäckträgerbrücke an deren dem Motorradfahrersitz bzw. der -sitzbank abgewandten Längsseite

- 2 -

eine von dieser Längsseite nach hinten vorstehende Halterungszunge angebracht, in deren frei vorstehenden Ende ein Ausschnitt ausgebildet ist.

Zur Halterung und Sicherung eines Motorradkoffers an der Gepäckträgerbrücke werden zuerst die in dessen Boden eingesetzten Schrauben mit den unter Federdruck stehenden Unterlagscheiben von oben in den mittleren breiten Bereich der konisch zulaufenden Ausschnitte der Gepäckträgerbrücke eingeführt und dann in der Fahrtrichtung des Motorrades gesehen so weit nach vorne geschoben, bis sie fest in den konisch zulaufenden Ausschnitten der Gepäckträgerbrücke sitzen. Während des Verschiebens der auf der Kofferunterseite angebrachten Schrauben mit den Unterlagscheiben in den konisch zulaufenden Ausschnitten der Gepäckträgerbrücke wird gleichzeitig die an der Unterseite der Gepäckträgerbrücke angebrachte Halterungszunge in das am Boden des Motorradkoffers angebrachte Halterungsschloß eingeführt, und sobald die Schrauben mit den unter Federdruck stehenden Unterlagscheiben fest in den konisch zulaufenden Ausschnitten der Gepäckträgerbrücke sitzen, rastet das Halterungsschloß in den Ausschnitt am freien vorderen Ende der Halterungszunge ein. Als Schutz vor einem unbeabsichtigten und unberechtigten Abnehmen des Motorradkoffers wird das Schloß anschließend abgeschlossen, wodurch dann der Koffer fest und sicher an der Gepäckträgerbrücke gehaltert ist.

Bei dieser Art der Befestigung und Anbringung eines Motorradkoffers an einer quer zur Motorradlängsachse bzw. zur Fahrtrichtung angebrachten Gepäckträgerbrücke dient das Schloß sowohl zur Sicherung als auch zur Halterung des Motorradkoffers an der Gepäckträgerbrücke. Während einer Fahrt ist ein Motorrad starken Erschütterungen und Schwingungen ausgesetzt, welche über die seitlich angebrachten Träger bzw. Halterungen und die quer dazu angebrachte Gepäckträgerbrücke auf das Halterungsschloß übertragen werden. Aus diesem Grund ist dann sowohl das Schloß als auch die an der Gepäckträgerbrücke angebrachte Halterungszunge einer hohen Beanspruchung ausgesetzt und aufgrund der oft starken Erschütterungen und Schwingungen des Motorrades einem hohen Verschleiß unterworfen. Ferner dringen in das Schloß bzw. in den Einführungsschlitz für die Halterungszunge im Laufe der Zeit Straßenstaub, Schmutz und Wasser ein, was einen zusätzlichen schnellen Verschleiß und ein Abnutzen bzw. Ausschlagen des Schlosses zur Folge hat. Der Motorradkoffer ist dann nicht mehr mit der erforderlichen Sicherheit fest mit der Gepäckträgerbrücke verbunden, so daß aus Sicherheitsgründen in verhältnismäßig kurzen Abständen das Halterungsschloß und/oder die an der Gepäckträgerbrücke angebrachte Halterungszunge ausgewechselt werden müssen.

Aufgabe der Erfindung ist es daher, ein Zwischenteil zu schaffen, mit welchem ein Gepäckstück, vorzugsweise in Form eines Motorradkoffers zuverlässig und sicher an einer an einem Motorrad angebrachten Gepäckträgerbrücke abnehmbar befestigbar ist. Gemäß der Erfindung ist dies bei einem Zwischenteil zum sicheren Haltern insbesondere eines Motorradkoffers an einer Gepäckträgerbrücke durch die Merkmale im kennzeichnenden Teil des Anspruchs 1 erreicht. Vorteilhafte Weiterbildungen der Erfindung sind in den Unteransprüchen angegeben.

Wenn das erfindungsgemäße Zwischenteil mittels Schrauben, durch welche ein Schloß wie bisher ohnehin an einem Motorradkoffern angebracht und gehalten wird, an dem Boden des Koffers befestigt ist, liegt das Zwischenteil mit seiner Unterseite am Kofferboden an, und an ihm ausgebildete, klauenförmige Ansätze weisen dadurch von dem Kofferboden einen Abstand auf, der etwa der Dickenabmessung einer Gepäckträgerbrücke entspricht, an welcher ein solcher Motorradkoffer zu befestigen und zu sichern ist. Wenn nun die Schrauben mit den gefederten Unterlagscheiben bzw. gefedert gehalterte Klauen, die an der Längsseite des Kofferbodens

- 4 -

vorgesehen sind, welche der Längsseite gegenüberliegt, an welcher das Sicherungsschloß und das Zwischenteil angebracht sind, in die erwähnten, konisch zulaufenden Ausschnitte in der Auflagefläche der Gepäckträgerbrücke eingeführt werden und so weit nach vorne verschoben werden, daß die Schrauben mit den gefederten Unterlagscheiben bzw. die gefedert gehalterten Klauen fest in den Ausschnitten der Gepäckträgerbrücke sitzen, umgreifen die beiden von dem Zwischenteil vorstehenden, klauenförmigen Ansätze die Gepäckträgerbrücke. Da die Dicke der etwa T-förmig ausgebildeten Platte des Zwischenteils etwas geringer ist als die Dickenabmessung der Gepäckträgerbrücke, liegen die beiden klauenförmigen Ansätze des Zwischenteils auf der Unterseite der Gepäckbrücke satt an deren hinteren Rand an, so daß dadurch eine feste und sichere Verbindung zwischen dem Motorradkoffer und der Gepäckbrücke geschaffen ist. Während die klauenförmigen Ansätze des Zwischenteils den hinteren Rand der Gepäckträgerbrücke zu umfassen beginnen, dringt die auf dieser Seite der Gepäckträgerbrücke angebrachte Halterungszunge in den Einführungsschlitz des Sicherungsschlosses ein.

Sobald daher die beiden klauenförmigen Ansätze des Zwischenteils den in Fahrtrichtung des Motorrads gesehenen, hinteren Rand der Gepäckträgerbrücke umfassen und satt an deren Unterseite anliegen, ist die von demselben Rand der Gepäckträgerbrücke vorstehende Halterungszunge in das Sicherungsschloß eingerastet. Durch Verschließen des Sicherungsschlosses ist dann ein Motorradkoffer absolut sicher und zuverlässig an einer Gepäckträgerbrücke gehaltert. Im Unterschied zu der bisherigen, eingangs beschriebenen Ausführung, bei welcher das Schloß sowohl zur Sicherung als auch zur Halterung eines Motorradkoffers an einer Gepäckträgerbrücke vorgesehen war, übernimmt die sichere Halterung und Befestigung eines Motorradkoffers an der Gepäckträgerbrücke nunmehr das gemäß der Erfindung vorgesehene und ausgebildete Zwischenteil, während das Schloß nurmehr dazu dient, den Koffer an der Gepäckträgerbrücke zu sichern und ein unberechtigtes Abnehmen des Koffers zu verhindern. Die eingangs erwähnten starken Erschütterungen und Schwingungen, denen ein Motorrad und damit auch die Träger sowie die Gepäckträgerbrücke des Motorrads ausgesetzt sind, werden ausschließlich von dem erfindungsgemäßen Zwischenteil übernommen und abgefangen. Da sowohl die gefederten Halterungsklauen als auch die beiden klauenförmigen Ansätze des Zwischenteils mit Reibungsschluß satt an der Unterseite der Gepäckträgerbrücke anliegen, ist dadurch eine feste und zuverlässige, kraftschlüssige Verbindung zwischen der Gepäckträgerbrücke und dem Motorradkoffer geschaffen, so daß eine Eigenbewegung oder Relativverschiebung zwischen dem Koffer und der Gepäckträgerbrücke sicher unterbunden ist. Da beim Vorsehen des erfindungsgemäßen Zwischenteils das Schloß nurmehr Sicherungsaufgaben zu erfüllen hat und die an der Gepäckträgerbrücke angebrachte, entsprechend ausgebildete Halterungszunge fest und sicher in dem Einführungsschlitz des Halterungsschlosses sitzt, ist sowohl die Zunge als auch insbesondere das Halterungsschloß trotz des Einwirkens von Straßenstaub, Schmutz und Wasser praktisch keinem Verschleiß unterworfen, da im Unterschied zu der bisherigen Anbringung des Schlosses bei Verwendung des Zwischenteils die an der Gepäckträgerbrücke angebrachte Halterungszunge und das Schloß einander fest zugeordnet sind und praktisch keine Erschütterungen und Schwingungen aushalten müssen, da diese von dem Zwischenteil abgefangen und aufgenommen werden.        Die sichere Halterung und Befestigung eines Motorradkoffers an einer Gepäckträgerbrücke ist somit gemäß der Erfindung von dem Zwischenteil übernommen, so daß dadurch irgendwelche mechanischen Beanspruchungen, welche durch das Einwirken von Staub, Schmutz oder Wasser zu einem schnellen vorzeitigen Verschleiß insbesondere des Schlosses führen würden, von dem Schloß ferngehalten sind, so daß bei Verwendung des erfindungsgemäßen Zwischenteils zumindest wegen Verschleißerscheinungen aufgrund von Einwirken von Staub, Schmutz oder Wasser kaum ein Schloß ausgewechselt werden muß.

Da das erfindungsgemäße Zwischenteil ebenso wie die Gepäckträgerbrücke aus einem verschleißfesten und widerstandsfähigen Kunststoff hergestellt sind, und ferner aufgrund der Ausbildung des Zwischenteils fest und sicher miteinander verbunden sind, unterliegen bei einem gewissenhaften Einführen und Anbringen eines mit dem erfindungsgemäßen Zwischenteil versehenen Koffers an einer Gepäckträgerbrücke weder der Koffer mit dem angebrachten Zwischenteil noch die Gepäckträgerbrücke einem erkennbaren Verschleiß. Somit läßt sich bei Verwenden des erfindungsgemäßen Zwischenteils auch ein abnehmbarer Motorradkoffer absolut sicher und zuverlässig vorzugsweise mit einer quer zur Fahrtrichtung angebrachten Gepäckträgerbrücke verbinden.

Nachfolgend wird eine bevorzugte Ausführungsform der Erfindung unter Bezugnahme auf die anliegenden Zeichnungen im einzelnen erläutert. Es zeigen:

Fig.1                    eine Draufsicht auf eine bevorzugte Ausführungsform eines Zwischenteils gemäß der Erfindung;

Fig.2                    eine Schnittansicht entlang der Linie II-II in Fig.1;

Fig.3                    eine Seitenansicht des Zwischenteils , und

Fig.4                    eine Ansicht des Zwischenteils von unten.

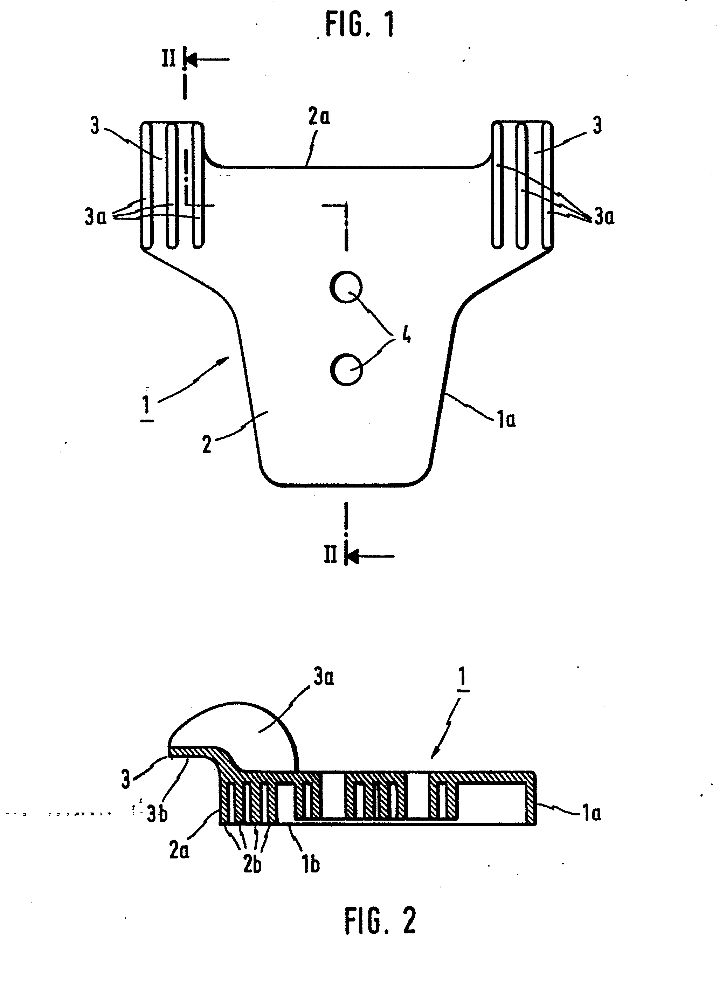

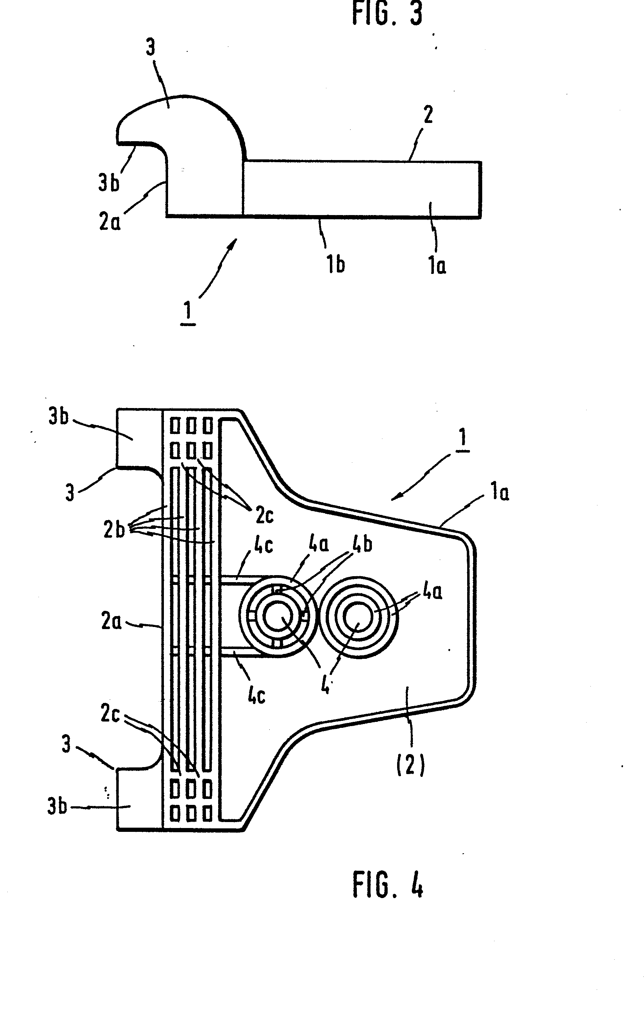

In Fig.1 ist eine Draufsicht auf ein Zwischenteil 1 gemäß der Erfindung dargestellt, welches eine etwa T-förmig ausgebildete Platte 2 aufweist. Von dem querverlaufenden Teil 2a der etwa T-förmig ausgebildeten Platte 2 stehen von deren Oberseite senkrecht zu dem querverlaufenden Teil 2a und

an dessen äußeren Enden zwei klauenförmige Ansätze 3 vor, was besonders deutlich aus der Schnittansicht der Fig.2 bzw. der Seitenansicht der Fig.3 zu ersehen ist. Die Unterseite 3b der klauenförmigen Ansätze 3 ist jeweils eben ausgebildet und verläuft parallel zu der ebenfalls ebenen Oberseite der etwa T-förmig ausgebildeten Platte 2. An der Oberseite der klauenförmigen Ansätze 3 sind mehrere, vorzugsweise drei etwa halbkreisförmige Versteifungssegmente 3a ausgebildet. Etwa in der Mitte der T-förmig ausgebildeten Platte 2 sind Bohrungen 4 vorgesehen, durch welche nicht näher dargestellte Schrauben eines ebenfalls nicht dargestellten Sicherungsschlosses geführt sind, die mit dem Boden eines ebenfalls nicht dargestellten Motorradkoffers verschraubt und dadurch in diesem gehaltert sind.

Zur Führung der Schrauben die zur gleichzeitigen Befestigung des Sicherungsschlosses und des Zwischenteils 1 an dem Boden eines Motorradkoffers dienen, sind auf der Unterseite der T-förmig ausgebildeten Platte 2 zu den Bohrungen 4 konzentrisch angeordnete Führungs- und Versteifungszylinder 4a ausgebildet, zwischen welchen zum Teil Abstandsstege 4b ausgebildet sind, wie insbesondere aus Fig.4 zu ersehen ist. Ferner sind auf der Unterseite der T-förmig ausgebildeten Platte 2 parallel zu deren querverlaufenden Teil 2a Versteifungsrippen 2b ausgebildet, zwischen denen im Bereich der klauenförmigen Ansätze 3 zur weiteren Versteifung Abstandsstege 2c ausgebildet sind (siehe Fig.4). Ferner sind zwischen den Versteifungsrippen 2b und einer der Bohrungen 4 Verbindungsstege 4c vorgesehen, welche im Bereich der Versteifungsrippen 2b die Funktion von Verbindungsstegen haben. Ferner weist die T-förmig ausgebildete Platte 2 des Zwischenteils 1 einen die Platte umgebenden, rundherum verlaufenden Randteil 2a auf. Hierbei ist die Höhe des Randteils 1a des Zwischenteils 1 so bemessen, daß der Abstand von der Unterseite 1b des Randteils 1a bzw. der Versteifungsrippen 2b und der Unterseite 3b der klauenförmigen Ansätze 3 so bemessen ist, daß er etwas geringer ist

als die Dickenabmessung einer nicht näher dargestellten Gepäckträgerbrücke, deren Randteil von den klauenförmigen Ansätzen 3 umfaßt wird.

Durch diese Bemessung des Abstandes zwischen der Unterseite 3b der klauenförmigen Ansätze 3 und der Unterseite 1b des Randteils 1a bzw. der Versteifungsrippen 2b ist sichergestellt, daß die Klauen satt und damit kraftschlüssig an dem Randbereich einer Gepäckträgerbrücke anliegen, wenn das erfindungsgemäße Zwischenteil 1 mittels durch die Bohrungen 4 verlaufender Schloßschrauben fest mit dem Boden eines an der Gepäckträgerbrücke anzubringenden, nicht näher dargestellten Motorradkoffers befestigt ist. Durch die beschriebene und in den Zeichnungen dargestellte Ausbildung der an dem Zwischenteil 1 vorgesehenen, klauenförmigen Ansätze 3 ist ein Koffer, an dessen Boden das erfindungsgemäße Zwischenteil 1 befestigt ist, sicher und zuverlässig an einer Motorrad-Gepäckträgerbrücke gehaltert, und gleichzeitig braucht das an der Oberseite der T-förmig ausgebildeten Platte 2 des Zwischenteils 1 angebrachte, in den Zeichnungen nicht näher dargestellte Schloß nurmehr die Sicherung eines Koffers an einer Gepäckträgerbrücke zu übernehmen, während es bezüglich der eigentlicher Halterung und Anbringung des Koffers an der Gepäckträgerbrücke durch das erfindungsgemäße Zwischenteil 1 entlastet ist.

Ende der Beschreibung

DIPL.-ING. A. v. KIRSCHBAUM
PATENTANWALT

GERMERING. 15.6.1982 ki/na
HERMANN-EHLERS-STR. 21a
**0096108**
TELEFON MÜNCHEN 8411046

Anwaltsakte:K-1291 EPA

KRAUSER Kraftfahrzeug-
Zubehör Vertriebs-GmbH
D-8905 Mering
Bundesrepublik Deutschland

---

Zwischenteil

---

Patentansprüche

1. Zwischenteil zum sicheren Haltern insbesondere eines Motorradkoffers an einer Gepäckträgerbrücke, dadurch g e - k e n n z e i c h n e t, daß das Zwischenteil (1) aus einem verschleißfesten, widerstandsfähigen Kunststoff besteht und eine in der Draufsicht etwa T-förmig ausgebildete Platte (2) aufweist, und daß an dem querverlaufenden Teil(2a) der etwa T-förmig ausgebildeten Platte von deren Oberseite aus senkrecht zu dem querverlaufenden Teil nach außen jeweils zwei klauenförmige Ansätze (3) vorstehen.

2. Zwischenteil nach Anspruch 1, dadurch g e k e n n - z e i c h n e t, daß die Dicke der etwa T-förmig ausgebil-

- 2 -

deten Platte (2) etwas geringer als die Dickenabmessung der Gepäckträgerbrücke ist.

3. Zwischenteil nach einem der Ansprüche 1 oder 2, dadurch gekennzeichnet, daß die zwei klauenförmigen Ansätze (3 ) auf ihrer Oberseite Versteifungssegmente (3a) aufweisen, und die Platte (2 ) an dem querverlaufenden Teil (2a) mehrere parallel zu diesem (2a) verlaufende, auf der Unterseite ausgebildete Versteifungsrippen (2b) aufweist.

4. Zwischenteil nach einem der vorhergehenden Ansprüche, dadurch gekennzeichnet, daß der verschleißfeste, widerstandsfähige Kunststoff, aus dem das Zwischenteil (1 ) hergestellt ist, Polypropylen ist.

1/2 0096108

FIG. 1

FIG. 2

## FIG. 3

## FIG. 4